# EUROPEAN PATENT SPECIFICATION

(11) **EP 2 348 670 B1**
(45) Date of publication and mention of the grant of the patent: **23.03.2016**
(21) Application number: 09825731.4
(22) Date of filing: 13.07.2009
(51) Int. Cl.: G06Q 30/04, H04L 12/14, H04W 4/24

(54) **A CHARGING METHOD, DEVICE AND SYSTEM**
VERFAHREN, VORRICHTUNG UND SYSTEM FÜR GEBÜHRENERFASSUNG
SYSTÈME, DISPOSITIF ET MÉTHODE DE TAXATION

(30) Priority: 14.11.2008 CN 200810177315
(43) Date of publication of application: 27.07.2011
(73) Proprietor: Huawei Technologies Co., Ltd., Longgang District Shenzhen, Guangdong 518129 (CN)
(72) Inventor: XU, Zhixian, Shenzhen Guangdong 518129 (CN)
(74) Representative: Isarpatent
(86) International application number: PCT/CN2009/072745
(87) International publication number: WO 2010/054556

(56) References cited:
- WO-A2-03/025809
- CN-A- 101 267 316
- CN-A- 101 296 092
- CN-A- 101 296 169
- US-A- 5 978 456
- US-A1- 2007 018 786

## Description

### FIELD OF THE INVENTION

The present invention relates to the field of the communications, and more particularly to a method, a device, and a system for charging.

### BACKGROUND OF THE INVENTION

A Mobile Data Service Platform (MDSP) system includes data service and content management, authentication and process control, and charging functions. When pricing a data service, the MDSP system may price or not price a management directory of the data service, and price or not price specific content of the data service. When the MDSP system manages the data service and content, the MDSP system needs to maintain a complete content management directory tree. The directory tree contains hundreds of thousands or even millions of pieces of content. The MDSP system queries charges of products by using the charging function, and performs real-time charging on user services.

In prior art, as disclosed in US 5,978,456 A a calling location and a receiving location are analyzed by called party number analysis means by processing a called party number for specifying a communication terminal at the receiving side transmitted by a communication terminal at the calling side is processed, a charging unit price is determined by charging unit price determination means by referring to contents of a table memory storing a table of charging unit price using the calling location and the receiving location as parameters, and the information of charging unit price is informed to a communication terminal through a charging unit price determination/information apparatus, whereby a communication fee according to the receiving destination can be informed to the caller, or the receiver.

In addition, as disclosed in WO 03/025809, it relates in general to communication networks and more specifically to a system and a method for charging in a communication network and to a communication network charging proxy server. The presented charging solution according to the present invention provides a combined on- and offline charging mechanism, which makes a number of different billing alternatives and charging related services possible in a cost-efficient way.

### SUMMARY OF THE INVENTION

The present invention is directed to a method, a device and a system for charging as defined by the subject matter of the independent claims. Preferred embodiments are defined by the dependent claims. The charging system cooperates with a data service platform to support a node charging function with a small coupling degree.

Compared with the prior art, the present invention has the following advantages.

According to the method provided by an embodiment of the present invention, a charging system receives a CCR carrying a data-service ID sent by a data service platform; queries a charge of a product according to the data service ID; and queries the charge of the product according to a data service home node ID corresponding to the data service ID when the charge of the product is not found according to the data service ID; and performs charging according to the found charge of the product. In this way, the charging function is separated from the data service platform, and the charging function is implemented by means of cooperation between the data service platform and the charging system.

### BRIEF DESCRIPTION OF THE DRAWINGS

To illustrate the technical solutions according to the embodiments of the present invention or in the prior art more clearly, the accompanying drawings involved the embodiments of the present invention or the prior art are described briefly below. Apparently, the accompanying drawings in the following description are only some embodiments of the present invention, and persons of ordinary skill in the art can derive other drawings from the accompanying drawings without creative efforts.
FIG. 1 is a flow chart of a method for charging according to an embodiment of the present invention;
FIG. 2 is a flow chart of a method for charging according to another embodiment of the present invention;
FIG. 3 is a schematic diagram of a device for charging according to an embodiment of the present invention; and
FIG. 4 is a schematic diagram of a system for charging according to an embodiment of the present invention

### DETAILED DESCRIPTION OF THE EMBODIMENTS

The technical solutions of the present invention are clearly and completely described below with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

The present invention is directed to a method, a device and a system for charging. In this way, a charging function is separated from a data service platform, and the charging function is implemented by means of cooperation between the data service platform and the charging system.

Detailed description of the method, the device and the system for charging of the present invention is given below with reference to the accompanying drawings and embodiments.

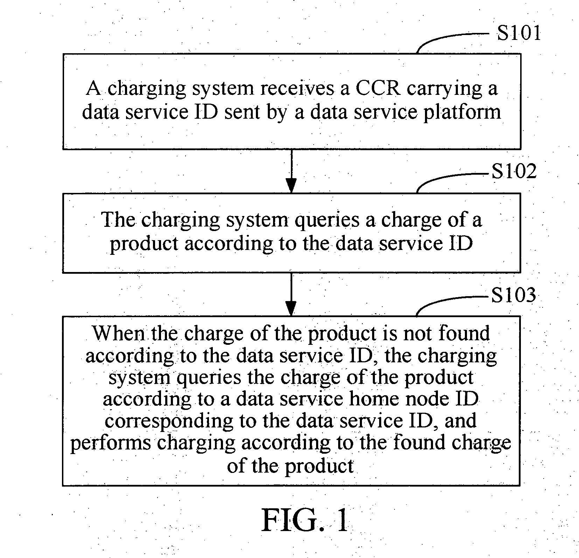

An embodiment of the present invention provides a method for charging. Referring to FIG. 1, the method includes the following steps:
Step S101: A charging system receives a CCR carrying a data service ID sent by a data service platform; where the CCR is configured to request to obtain a charge of a product, and the charge of the product can be found according to the ID carried in the CCR.
Step S102: The charging system queries the charge of the product according to the data service ID; or the charging system queries the charge of the product according to the data service ID carried in the CCR and a preset relationship between data services and products. After the query succeeds, the charging system performs charging according to the found charge of the product.
Step S103: When the charge of the product is not found according to the data service ID, the charging system queries the charge of the product according to a data service home node ID corresponding to the data service ID, and performs charging according to the found charge of the product.

The data service home node ID may be found by using the data service ID and preset data service home node information. The preset data service home node information may be a mapping relationship between the data service ID and the data service home node ID. After the data service home node ID is found, the charge of the product is queried according to the data service home node ID and a preset relationship between data service nodes and products. After the query succeeds, the charging system performs charging according to the found charge of the product.

When the charge of the product is not found according to the data service home node ID, a corresponding upper-level node is queried in a preset data service node tree according to the data service home node ID, and the charge of the product corresponding to the upper-level node according to the data service home node ID is queried. The charging system performs charging according to the found charge of the product. The preset data service node tree is configured to store a corresponding relationship between nodes at different levels.

The data service platform in the above steps may be an MDSP, a fixed network MDSP and other data service platforms with similar functions.

Through the method provided in this embodiment of the present invention, the charge of the product is found according to the ID carried in the request sent by the data service platform and each preset mapping relationship, thereby achieving accurate and fast charging. When the charge of the product is queried by using nodes through the preset relationship between data service nodes and products, the parent nodes may be queried level by level to finally find the charge of the product, ensuring the success rate of querying the charge of the product.

With higher charging requirements of operators, the charging function is separated from the MDSP according to the 3rd Generation Partner Project (3GPP) specification. An Online Charging System (OCS) completes the charging function while the MDSP only reserves the data services and content management, and authentication and process control. The OCS performs charging information interaction and credit control with the MDSP by using the Diameter Credit Control (DCC) protocol. The MDSP sends a CCR to the OCS, and the OCS sends a Credit Control Answer (CCA) to the MDSP.

In an embodiment of the present invention, a list maintained by an MDSP content management subsystem includes a data service node tree table and a data service (content) home node table.

Firstly, the MDSP content management subsystem maintains the data service node tree table, which is shown in Table 1.

**Table 1 Data service node tree table**

| Parameter | Description |
|---|---|
| *Node_Id | Node ID |
| Parent_Node_Id | Parent node ID |
| ...... | Other descriptions of node |

An example of the data service node tree is shown as follows:

| Roo Node | First-Level Directory | Second-Level Directory | Third-Level Directory | Fourth-Level Directory | ...... |
|---|---|---|---|---|---|
| Root | Sina Website | | | | |
| | | Finance Channel | | | |
| | | | Daily News | | |
| | | | Stock Information | | |
| | | Sports Channel | | | |
| | | | NBA | | |
| | | | | News | |
| | | | | Live Online Programs | |
| | | | English Premier League | | |
| | | | | News | |
| | | | | Live Online Programs | |
| | Sohoo Website | | | | |
| | | Daily Weather | | | |
| | | | Guangdong Daily Weather | | |
| | | | National Daily Weather | | |
| | | Chinese Stock Market | | | |
| | | | Shanghai Stock Market | | |
| | | | Shenzhen Stock Market | | |
| | | | Hong Kong Stock Market | | |
| | | Entertainment Channel | | | |
| | | | RBT | | |
| | | | Music | | |
| | | | Picture | | |
| | | | Movie | | |

In the above table, information about each level is a data service node, and a higher-and-lower-level relationship is maintained in the data services node tree table.

For specific content, the data service node tree table provided by this embodiment of the present invention has a very small data volume, a small change frequency, and may be synchronized to the OCS through a synchronization interface.

Secondly, the MDSP content management subsystem also maintains the data service (content) home node table, as shown in Table 2.

**Table 2 Data service (content) home node table**

| Parameter | Description |
|---|---|
| *Service_Id | Data service ID (content ID) |
| *Node_Id | Node ID |
| ...... | Other descriptions of content |

Specific data services and content finally displayed on a webpage, such as daily weather reminder, stock service, news, pictures, ring tones, music, and movies are data service IDs (content IDs), which can reach hundreds of thousands, or even one million or ten million. In order to facilitate the management and charging, these data service IDs (content IDs) belong to one content management service node generally. In actual data maintenance process, a large amount of addition, deletion and modification operations may be performed on data services/content in table 2; a home directory of the data services/content may be modified; directories may be merged or a directory may be split; the content may be moved from one directory to another directory. These operations often cause a large amount of data operations on the data service (content) home node table. In order to reduce the impact of the large amount of operations on the OCS and reduce the coupling degree between the OCS and the MDSP, data change in the data service (content) home node table is only maintained in the MDSP system, and is not synchronized to the OCS.

In this embodiment of the present invention, a list maintained by an OCS management subsystem includes a data service node tree table and a pricing relationship table. The data service node tree table is in the same form as the data service node tree table maintained by the MDSP content management subsystem. The pricing relationship table is a list that prices and maintains nodes and data services (content) to be priced when the OCS performs product management, and the form is shown in Table 3 and Table 4.

**Table 3 Relationship table between data services (content) and products**

| | |
|---|---|
| Service_ID | Data service ID (content ID) |
| Product_ID | Product ID |
| ...... | Other information |

**Table 4 Relationship table between data service nodes and products**

| | |
|---|---|
| Node_ID | Node ID |
| Product_ID | Product ID |
| ...... | Other information |

Of course, a data service ID and a node ID may be differentiated by adding types or using number segments. In this way, Table 3 and Table 4 may be merged into one table which expresses the content information of both tables in essence.

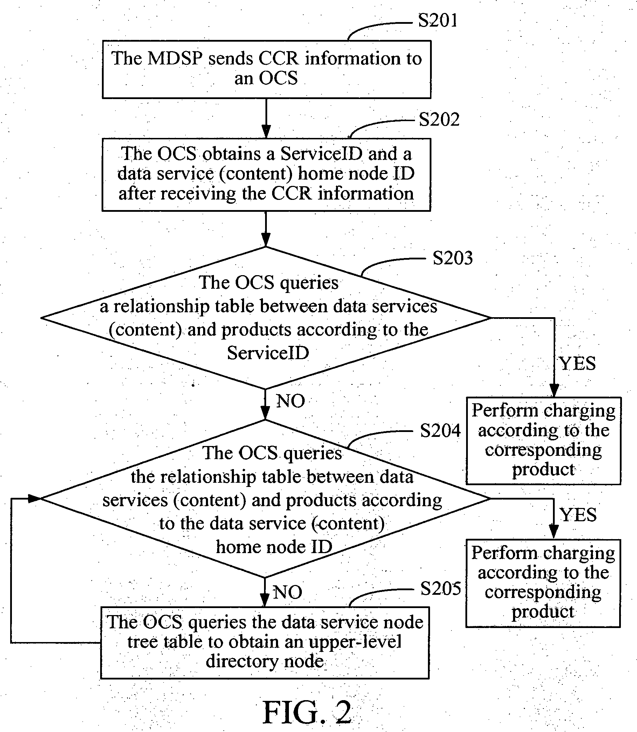

A real-time charging system and an MDSP are taken as an example to describe the method provided in this embodiment of the present invention in detail. Referring to FIG. 2, the method includes the following steps.

Step S201: The MDSP sends CCR message to the OCS, where the CCR message carries a ServiceID and a data service (content) home node ID.

Specifically, charging DCC interface messages between an MDSP service logic control subsystem and an OCS charging subsystem are extended. For example, on the basis of the ServiceID only for transmitting the data services (content), , a node AVP is added to a CCR (initial) message and a CCR (Event) message to transmit the data service (content) home node ID. Of course, a complete directory of the data service home node, that is, complete directory relationship information from a root node to the home node, may also be transmitted. The data service (content) home node ID is obtained by querying the data service (content) home node table, and the complete directory relationship information from the root node to the home node may also be obtained by further querying the data service node tree table.
Step S202: The OCS receives the CCR message, and then obtains the ServiceID and the data service (content) home node ID carried in the CCR message.
Step S203: The OCS queries the relationship table between data services (content) and products according to the ServiceID. If a valid record corresponding to the ServiceID is found, the corresponding product is charged; and if a valid record corresponding to the ServiceID is not found, step S204 is performed.
Step S204: The OCS queries the relationship table between data service nodes and products according to the data service (content) home node ID. If a valid record corresponding to the home node ID is found, a corresponding product is charged; and if a valid record corresponding to the home node ID is not found, step S205 is performed.
Step 205: The OCS queries the data service node tree table to find an upper-level directory node, that is, performs step S204 with the upper level directory node as a condition. The process is repeated until a priced product is found. If the complete directory relationship information from the root node to the home node corresponding to the service ID is transmitted over the DCC interface, the upper-level directory node is directly obtained according to the information without querying the data service node tree table.

According to the method provided in the embodiment of the present invention, the OCS receives the CCR sent by the MDSP and queries the charge of the product according to the data service ID carried by the CCR; the charge of the product is queried according to the data service home node ID corresponding to the data service ID if the charge of the product is not found according to the service ID; if the charge of the product is not found according to the data service home node ID, the charge of the product corresponding to the upper-level node of the data service home node ID is queried and the found charge of the product is returned to the MSDP. In this way, a charging function may be separated from the MDSP, and the charging function is implemented through cooperation between the MDSP and the OCS.

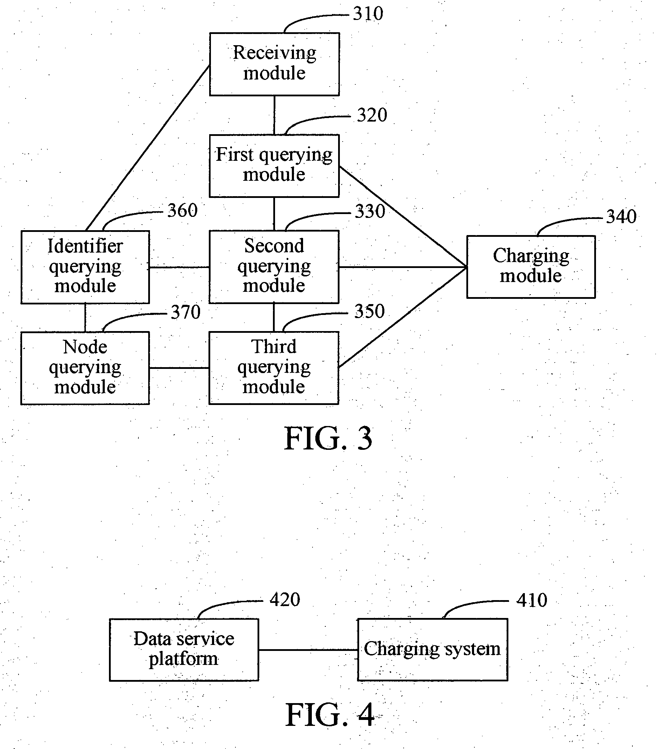

In order to implement the method provided by the embodiment of the present invention, an embodiment of the present invention further provides a device for charging. Referring to FIG. 3, the device includes a receiving module 310, a first querying module 320, a second querying module 330 and a charging module 340.

The receiving module 310 is configured to receive a CCR carrying a data service ID sent by a data service platform, where the CCR is configured to request to obtain a charge of a product, and the charge of the product may be found according to the ID carried in the CCR.

The first querying module 320 is configured to query the charge of the product according to the data-service ID carried in the CCR; and query the charge of the product according to the data service ID carried in the CCR and a preset relationship between data services and products. If the query succeeds, the charging module 340 performs charging according to the found charge of the product.

The second querying module 330 is configured to query the charge of the product according to a data service home node ID corresponding to the data service ID if the query of the first querying module 320 fails. Specifically, if the first querying module 320 fails to find the charge of the product, an ID querying module 360 may query the data service home node ID by using the data service ID and preset data service home node information, where the preset data service home node information may be a corresponding relationship between the data service ID and the data service home node ID. The ID querying module 360 is configured to query the obtained data service home node ID by using the data service ID and the preset data service home node information. After the data service home node ID is found, the charge of the product is queried according to the data service home node ID and a preset relationship between data service nodes and products. After the query succeeds, the charging module 340 performs charging according to the found charge of the product.

The charging module 340 is configured to perform charging according to the charge of the product found by the first querying module 320 or the second querying module 330.

The device further includes a third querying module 350.

The third querying module 350 is configured to query the charge of the product corresponding to an upper-level node of the data service home node ID when the query of the second querying module 330 fails; and if the charge of the product is not found according to the data service home node ID, a node querying module 370 queries the corresponding upper-level node in a preset data service node tree according to the data service home node ID, and then queries the charge of the product corresponding to the upper-level node of the data service home node ID; then the charging module 340 performs charging according to the found charge of the product. The preset data service node tree is configured to store a corresponding relationship between nodes at different levels.

The node querying module 370 is configured to query the corresponding upper-level node in the preset data service node tree according to the data service home node ID found by the ID querying module 360; the preset data service node tree is configured to store the corresponding relationship between nodes at different levels.

Through the device provided in the embodiment of the present invention, each querying module may accurately and rapidly query the charge of the product according to the ID carried in the request received by the receiving module. When the charge of the product is queried by using nodes through the preset relationship between data service nodes and products, the parent nodes may be queried level by level to finally find the charge of the product, ensuring the success rate of querying the charge of the product.

An embodiment of the present invention further provides a system for charging. Referring to FIG. 4, the system for charging includes a charging system 410 and a data service platform 420.

The charging system 410 is configured to receive a CCR carrying a data service ID sent by the data service platform 420; query a charge of a product according to the data service ID; query the charge of the product according to a data service home node ID corresponding to the data service ID when the charge of the product is not found according to the data service ID; and perform charging according to the found charge of the product.

The data service platform 420 is configured to send the CCR to the charging system 410.

Lists preset in the charging system 410 include a data service node tree table, a data service home node table, a relationship table between data services and products, and a relationship table between data service nodes and products.

The charging system 410 includes a receiving module, a first querying module, a second querying module and a charging module.

The receiving module is configured to receive the CCR carrying the data service ID sent by the data service platform, where the CCR is configured to request to obtain the charge of the product, and the charge of the product may be found according to the ID carried in the CCR.

The first querying module is configured to query the charge of the product according to the data service ID carried in the CCR; and query the charge of the product according to the data service ID carried in the CCR and a preset relationship between data services and products. If the query succeeds, the charging module performs charging according to the found charge of the product.

The second querying module is configured to query the charge of the product according to the data service home node ID corresponding to the data service ID when the query of the first querying module fails. Specifically, if the first querying module fails to find the charge of the product, an ID querying module may query the data service home node ID by using the data service ID and preset data service home node information, where the preset data service home node information may be a corresponding relationship between the data service ID and the data service home node ID. The ID querying module is configured to query the data service home node ID by using the data service ID and the preset data service home node information. After the data service home node ID is found, the charge of the product is queried according to the data service home node ID and the preset relationship between data service nodes and products. After the query succeeds, the charging module performs charging according to the found charge of the product.

The charging module is configured to perform charging according to the charge of the product found by the first querying module or the second querying module.

Through the method, the device and the system provided by the present invention, the charging system receives a CCR carrying a data service ID sent by a data service platform; queries a charge of a product according to the data service ID; and queries the charge of the product according to a data service home node ID corresponding to the data service ID when the charge of the product is not found according to the data service ID; and performs charging according to the found charge of the product. In this way, a charging function is separated from an MDSP, and the charging function is implemented through cooperation between the MDSP and the OCS.

Through the above description of the implementation, it is clear to persons skilled in the art that the present invention may be implemented through hardware, or through software plus a necessary universal hardware platform. Based on this, the technical solutions of the present invention may be embodied in the form of a software product. The software product may be stored in a nonvolatile storage medium, for example, compact disk-read only memory (CD-ROM), universal serial bus (USB) flash drive, or removable hard disk, and include several instructions configured to instruct computer equipment, for example, a personal computer, a server, or network equipment, to perform the method according to the embodiments of the present invention.

## Claims

1. A method for charging, comprising:
receiving, by a receiving module (310), a credit control request, CCR, carrying a data service identifier, ID, sent by a data service platform (420);
querying, by a first querying module (320), a charge of a product according to the data service ID;
querying, by a second querying module (330), the charge of the product according to a data service home node ID corresponding to the data service ID when the charge of the product is not found according to the data service ID; and
performing, by a charging module (340), charging according to the found charge of the product,
said method **characterised in that**:
when the charge of the product is not found according to the data service home node ID, a corresponding upper-level node is queried by a node querying module (370) in a preset data service node tree according to the data service home node ID, and the charge of the product corresponding to the upper-level node of the data service home node ID is queried; and the charging is performed by the charging module (340) according to the found charge of the product, wherein the preset data service node tree is configured to store a corresponding relationship between nodes at different levels.

2. The method according to claim 1, wherein the querying of the charge of the product according to the data service ID comprises:
querying, by the first querying module (320), the charge of the product according to both the data service ID and a preset corresponding relationship between data services and products.

3. The method according to claim 1, wherein the querying of the charge of the product according to the data service home node ID corresponding to the data service ID comprises:
querying and obtaining, by an ID querying module (360), the data service home node ID according to both the data service ID and preset data service home node information; and
querying, the second querying module (330), the charge of the product according to both the data service home node ID and a preset corresponding relationship between data service nodes and products.

4. The method according to claim 3, wherein the querying and obtaining of the data service home node ID according to both the data service ID and the preset data service home node information specifically comprises:
querying and obtaining, by the ID querying module (360), the data service home node ID according to both the data service ID and a corresponding relationship between the data service ID and the data service home node ID.

5. The method according to claim 1, wherein the CCR further carries the data service home node ID; and the querying of the charge of the product according to the data service home node ID corresponding to the data service ID specifically comprises:
obtaining, by an ID querying module (360), the data service home node ID carried in the CCR, and querying, by the second querying module (330), the charge of the product according to both the data service home node ID and the preset corresponding relationship between data service nodes and products.

6. A device for charging, comprising:
a receiving module (310), configured to receive a credit control request, CCR, carrying a data service identifier, ID, sent by a data service platform (420);
a first querying module (320), configured to query a charge of a product according to the data service ID carried in the CCR;
a second querying module (330), configured to query the charge of the product according to a data service home node ID corresponding to the data service ID when query of the first querying module fails;
a third querying module (350), configured to query the charge of the product corresponding to an upper-level node of the data service home node ID in a preset data service node tree according to the data service home node ID when the query of the second querying module fails, wherein the preset data service node tree is configured to store a corresponding relationship between nodes at different levels, and
a charging module (340), configured to perform charging according to the charge of the product found by the first querying module, the second querying module or the third querying module (350).

7. The device according to claim 6, further comprising:
an ID querying module (360), configured to query and obtain the data service home node ID by using the data service ID and preset data service home node information.

8. The device according to claim 6, wherein the receiving module (310) is further configured to receive the CCR carrying the data service ID and the data service home node ID sent by the data service platform (420); and
the device further comprises an ID querying module (360), which is configured to obtain the data service home node ID from the CCR.

9. The device according to claim 7, further comprising:
a node querying module (370), configured to query a corresponding upper-level node in a preset data service node tree according to the data service home node ID found by the ID querying module (360).

10. A system for charging, comprising:
a charging system (410), configured to receive a credit control request, CCR, carrying a data service identifier, ID, sent by a data service platform (420); query a charge of a product according to the data service ID, query the charge of the product according to a data service home node ID corresponding to the data service ID when the charge of the product is not found according to the data service ID; and perform charging according to the found charge of the product; and
a data service platform (420), configured to send the CCR to the charging system,
**characterised in that**:
when the charge of the product is not found according to the data service home node ID, the charging system (410) is further configured to query a corresponding upper-level node in a preset data service node tree according to the data service home node ID, and query the charge of the product corresponding to the upper-level node of the data service home node ID, and perform the charging according to the found charge of the product, wherein the preset data service node tree is configured to store a corresponding relationship between nodes at different levels.

11. The charging system according to claim 10, wherein the querying, by the charging system (410), the charge of the product according to the data service home node ID corresponding to the data service ID specifically comprises: querying and obtaining the data service home node ID according to both the data service ID and preset data service home node information; and querying the charge of the product according to both the data service home node ID and a preset corresponding relationship between data service nodes and products.

12. The charging system according to claim 10, wherein the querying, by the charging system (410), the charge of the product according to the data service home node ID corresponding to the data service ID specifically comprises: obtaining the service data service home node ID carried in the CCR; and querying the charge of the product according to both the data service home node ID and a preset corresponding relationship between data service nodes and products.

## Patentansprüche

1. Verfahren zur Gebührenerfassung, umfassend:
Empfangen, durch ein Empfangsmodul (310), einer Kreditprüfungsanforderung ("Credit Control Request", CCR), die eine Datendienstkennung (ID) trägt, die von einer Datendienstplattform (420) gesendet wird;
Abfragen, durch ein erstes Abfragemodul (320), einer Gebühr eines Produkts gemäß der Datendienstkennung;
Abfragen, durch ein zweites Abfragemodul (330), der Gebühr des Produkts gemäß einer Datendienst-Heimknoten-Kennung, die der Datendienstkennung entspricht, wenn die Gebühr des Produkts nicht gemäß der Datendienstkennung gefunden wird; und
Durchführen, durch ein Gebührenerfassungsmodul (340), von Gebührenerfassung gemäß der gefundenen Gebühr des Produkts,
wobei das Verfahren **dadurch gekennzeichnet ist, dass**:
wenn die Gebühr des Produkts nicht gemäß der Datendienst-Heimknoten-Kennung gefunden wird, ein entsprechender Knoten einer höheren Ebene durch ein Knotenabfragemodul (370) in einem voreingestellten Datendienstknotenbaum gemäß der Datendienst-Heimknoten-Kennung abgefragt wird und die Gebühr des Produkts,
die dem Knoten einer höheren Ebene der Datendienst-Heimknoten-Kennung entspricht, abgefragt wird; und die Gebührenerfassung durch das Gebührenerfassungsmodul (340) gemäß der gefundenen Gebühr des Produkts durchgeführt wird, wobei der voreingestellte Datendienstknotenbaum dafür ausgelegt ist, eine entsprechende Beziehung zwischen Knoten verschiedener Ebenen zu speichern.

2. Verfahren nach Anspruch 1, wobei das Abfragen der Gebühr des Produkts gemäß der Datendienstkennung umfasst:
Abfragen, durch das erste Abfragemodul (320), der Gebühr des Produkts, sowohl gemäß der Datendienstkennung als auch einer voreingestellten entsprechenden Beziehung zwischen Datendiensten und Produkten.

3. Verfahren nach Anspruch 1, wobei das Abfragen der Gebühr des Produkts gemäß der Datendienst-Heimknoten-Kennung, die der Datendienstkennung entspricht, umfasst:
Abfragen und Erhalten, durch ein Kennungsabfragemodul (360), der Datendienst-Heimknoten-Kennung, sowohl gemäß der Datendienstkennung als auch voreingestellten Datendienst-Heimknoten-Informationen; und Abfragen, durch das zweite Abfragemodul (330), der Gebühr des Produkts sowohl gemäß der Datendienst-Heimknoten-Kennung als auch einer voreingestellten entsprechenden Beziehung zwischen Datendienstknoten und Produkten.

4. Verfahren nach Anspruch 3, wobei das Abfragen und Erhalten der Datendienst-Heimknoten-Kennung, sowohl gemäß der Datendienstkennung als auch voreingestellten Datendienst-Heimknoten-Informationen, insbesondere umfasst:
Abfragen und Erhalten, durch das Kennungsabfragemodul (360), der Datendienst-Heimknoten-Kennung, sowohl gemäß der Datendienstkennung als auch einer entsprechenden Beziehung zwischen der Datendienstkennung und der Datendienst-Heimknoten-Kennung.

5. Verfahren nach Anspruch 1, wobei die CCR ferner die Datendienst-Heimknoten-Kennung trägt; und das Abfragen der Gebühr des Produkts gemäß der Datendienst-Heimknoten-Kennung, die der Datendienstkennung entspricht, insbesondere umfasst:
Erhalten, durch ein Kennungsabfragemodul (360), der von der CCR getragenen Datendienst-Heimknoten-Kennung und Abfragen, durch das zweite Abfragemodul (330), der Gebühr des Produkts, sowohl gemäß der Datendienst-Heimknoten-Kennung als auch der voreingestellten entsprechenden Beziehung zwischen Datendienstknoten und Produkten.

6. Vorrichtung zur Gebührenerfassung, umfassend:
ein Empfangsmodul (310), das dafür ausgelegt ist, eine Kreditprüfungsanforderung ("Credit Control Request", CCR), die eine Datendienstkennung (ID) trägt, die von einer Datendienstplattform (420) gesendet wird, zu empfangen;
ein erstes Abfragemodul (320), das dafür ausgelegt ist, eine Gebühr eines Produkts gemäß der in der CCR getragenen Datendienstkennung abzufragen;
ein zweites Abfragemodul (330), das dafür ausgelegt ist, die Gebühr des Produkts gemäß einer Datendienst-Heimknoten-Kennung, die der Datendienstknotenkennung entspricht, abzufragen, wenn die Anfrage des ersten Abfragemoduls scheitert;
ein drittes Abfragemodul (350), das dafür ausgelegt ist, die Gebühr des Produkts entsprechend einem Knoten einer höheren Ebene der Datendienst-Heimknoten-Kennung in einem voreingestellten Datendienstknotenbaum gemäß der Datendienst-Heimknoten-Kennung abzufragen, wenn die Abfrage des zweiten Abfragemoduls scheitert, wobei der voreingestellte Datendienstknotenbaum dafür ausgelegt ist, eine entsprechende Beziehung zwischen Knoten verschiedener Ebenen zu speichern, und ein Gebührenerfassungsmodul (340), das dafür ausgelegt ist, Gebührenerfassung gemäß der Gebühr des Produkts, die durch das erste Abfragemodul, das zweite Abfragemodul oder das dritte Abfragemodul (350) gefunden wurde, durchzuführen.

7. Vorrichtung nach Anspruch 6, ferner umfassend:
ein Kennungsabfragemodul (360), das dafür ausgelegt ist, die Datendienst-Heimknoten-Kennung durch Nutzung der Datendienstkennung und voreingestellter Datendienst-Heimknoten-Informationen anzufragen und zu erhalten.

8. Vorrichtung nach Anspruch 6, wobei das Empfangsmodul (310) ferner dafür ausgelegt ist, die CCR, die die Datendienstkennung und die Datendienst-Heimknoten-Kennung, die durch die Datendienstplattform (420) gesendet werden, trägt, zu empfangen; und
die Vorrichtung ferner ein Kennungsabfragemodul (360) umfasst, welches dafür ausgelegt ist, die Datendienst-Heimknoten-Kennung aus der CCR zu erhalten.

9. Vorrichtung nach Anspruch 7, ferner umfassend:
ein Knotenabfragemodul (370), das dafür ausgelegt ist, einen entsprechenden Knoten einer höheren Ebene in einem voreingestellten Datendienstknotenbaum gemäß der Datendienst-Heimknoten-Kennung, die durch das Kennungsabfragemodul (360) gefunden wurde, abzufragen.

10. System zur Gebührenerfassung, umfassend:
ein Gebührenerfassungssystem (410), das dafür ausgelegt ist, eine Kreditprüfungsanforderung ("Credit Control Request", CCR), die eine Datendienstkennung (ID) trägt, die von einer Datendienstplattform (420) gesendet wird, zu empfangen; eine Gebühr eines Produkts gemäß der Datendienstkennung abzufragen; die Gebühr des Produkts gemäß einer Datendienst-Heimknoten-Kennung, die der Datendienstkennung entspricht, wenn die Gebühr des Produkts nicht gemäß der Datendienstkennung gefunden wird, abzufragen; und Gebührenerfassung gemäß der gefundenen Gebühr des Produkts durchzuführen; und eine Datendienstplattform (420), die dafür ausgelegt ist, die CCR an das Gebührenerfassungssystem zu senden,
**dadurch gekennzeichnet, dass**
wenn die Gebühr des Produkts nicht gemäß der Datendienst-Heimknoten-Kennung gefunden wird, das Gebührenerfassungssystem (410) ferner dafür ausgelegt ist, einen entsprechenden Knoten einer höheren Ebene in einem voreingestellten Datendienstknotenbaum gemäß der Datendienst-Heimknoten-Kennung abzufragen und die Gebühr des Produkts, die dem Knoten einer höheren Ebene der Datendienst-Heimknoten-Kennung entspricht, abzufragen und die Gebührenerfassung gemäß der gefundenen Gebühr des Produkts durchzuführen, wobei der voreingestellte Datendienstknotenbaum dafür ausgelegt ist, eine entsprechende Beziehung zwischen Knoten verschiedener Ebenen zu speichern.

11. System zur Gebührenerfassung nach Anspruch 10, wobei das Abfragen, durch das Gebührenerfassungssystem (410), der Gebühr des Produkts, gemäß der Datendienst-Heimknoten-Kennung, die der Datendienstkennung entspricht, insbesondere umfasst:
Abfragen und Erhalten der Datendienst-Heimknoten-Kennung, sowohl gemäß der Datendienstkennung als auch voreingestellten Datendienst-Heimknoten-Informationen; und Abfragen der Gebühr des Produkts, sowohl gemäß der Datendienst-Heimknoten-Kennung als auch einer voreingestellten entsprechenden Beziehung zwischen Datendienstknoten und Produkten.

12. System zur Gebührenerfassung nach Anspruch 10, wobei das Abfragen, durch das Gebührenerfassungssystem (410), der Gebühr des Produkts, gemäß der Datendienst-Heimknoten-Kennung, die der Datendienstkennung entspricht, insbesondere umfasst:
Erhalten der in der CCR getragenen Datendienst-Heimknoten-Kennung; und Abfragen der Gebühr des Produkts, sowohl gemäß der Datendienst-Heimknoten-Kennung als auch einer voreingestellten entsprechenden Beziehung zwischen Datendienstknoten und Produkten.

## Revendications

1. Procédé de facturation, comprenant :
la réception, par un module de réception (310), d'une demande de contrôle de crédit, CCR, transportant un identificateur, ID, de service de données, envoyé par une plate-forme de services de données (420),
la consultation, par un premier module de consultation (320), d'un prix d'un produit en fonction de l'identificateur ID de service de données,
la consultation, par un deuxième module de consultation (330), du prix du produit en fonction de l'identificateur ID d'un noeud de rattachement de service de données correspondant à l'identificateur ID de service de données lorsque le prix du produit n'est pas trouvé en fonction de l'identificateur ID de service de données, et
l'exécution, par un module de facturation (340), de la facturation en fonction du prix trouvé du produit,
ledit procédé étant **caractérisé en ce que** :
lorsque le prix du produit n'est pas trouvé en fonction de l'identificateur ID de noeud de rattachement de service de données, un noeud correspondant de niveau supérieur est requis par un module de consultation de noeuds (370) dans une arborescence de noeuds de services de données prédéterminée, en fonction de l'identificateur ID de noeud de rattachement de service de données, et le prix du produit correspondant au noeud de niveau supérieur de l'identificateur ID de noeud de rattachement de service de données est requis ; la facturation est alors effectuée par le module de facturation (340) en fonction du prix trouvé du produit, l'arborescence de noeuds de services de données prédéterminée étant configurée pour stocker une relation correspondante entre des noeuds à des niveaux différents.

2. Procédé selon la revendication 1, dans lequel la consultation du prix du produit en fonction de l'identificateur ID de service de données comprend :
la consultation, par le premier module de consultation (320), du prix du produit en fonction à la fois de l'identificateur ID de service de données et d'une relation correspondante prédéterminée entre des services de données et des produits.

3. Procédé selon la revendication 1, dans lequel la consultation du prix du produit en fonction de l'identificateur ID de noeud de rattachement de service de données correspondant à l'identificateur ID de service de données comprend :
la consultation et la récupération, par un module de consultation d'identificateurs ID (360), de l'identificateur ID de noeud de rattachement de service de données en fonction à la fois de l'identificateur ID de service de données et d'informations de noeuds de rattachement de service de données prédéterminées, et la consultation, par le deuxième module de consultation (330), du prix du produit en fonction à la fois de l'identificateur ID de noeud de rattachement de service de données et d'une relation correspondante prédéterminée entre des noeuds de services de données et des produits.

4. Procédé selon la revendication 3, dans lequel la consultation et la récupération de l'identificateur ID de noeud de rattachement de service de données en fonction à la fois de l'identificateur ID de service de données et d'informations de noeud de rattachement de service de données prédéterminées comprend en particulier :
la consultation et la récupération, par le module de consultation d'identificateurs ID (360), de l'identificateur ID de noeud de rattachement de service de données en fonction à la fois de l'identificateur ID de service de données et d'une relation correspondante entre l'identificateur ID de service de données et l'identificateur ID de noeuds de rattachement de service de données.

5. Procédé selon la revendication 1, dans lequel la demande CCR transporte de plus l'identificateur ID de noeud de rattachement de service de données ; et la consultation du prix du produit en fonction de l'identificateur ID de noeud de rattachement de service de données correspondant à l'identificateur ID de service de données comprend en particulier :
la récupération, par un module de consultation d'identificateurs ID (360), de l'identificateur ID de noeud de rattachement de service de données transporté dans la demande CCR, et la consultation, par le deuxième module de consultation (330), du prix du produit en fonction à la fois de l'identificateur ID de noeud de rattachement de service de données et de la relation correspondante prédéterminée entre des noeuds de services de données et des produits.

6. Dispositif destiné à la facturation, comprenant :
un module de réception (310) configuré pour recevoir une demande de contrôle de crédit, CCR, transportant un identificateur, ID, de service de données, envoyé par une plate-forme de services de données (420),
un premier module de consultation (320) configuré pour consulter un prix d'un produit en fonction de l'identificateur ID de service de données transporté dans la demande CCR,
un deuxième module de consultation (330) configuré pour consulter le prix du produit en fonction d'un identificateur ID de noeud de rattachement de service de données correspondant à l'identificateur ID de service de données lorsque la consultation du premier module de consultation a échoué,
un troisième module de consultation (350) configuré pour consulter le prix du produit correspondant à un noeud de niveau supérieur de l'identificateur ID de noeud de rattachement de service de données dans une arborescence de noeuds de services de données prédéterminée en fonction de l'identificateur ID de noeud de rattachement de service de données lorsque la consultation du deuxième module de consultation a échoué, l'arborescence de noeuds de services de données prédéterminée étant configurée pour stocker une relation correspondante entre des noeuds à des niveaux différents, et
un module de facturation (340) configuré pour effectuer une facturation en fonction du prix du produit trouvé par le premier module de consultation, le deuxième module de consultation ou le troisième module de consultation (350).

7. Dispositif selon la revendication 6, comprenant en outre :
un module de consultation d'identificateurs ID (360) configuré pour consulter et récupérer l'identificateur ID de noeud de rattachement de service de données en utilisant l'identificateur ID de service de données et les informations de noeuds de rattachement de services de données prédéterminées.

8. Dispositif selon la revendication 6, dans lequel le module de réception (310) est en outre configuré pour recevoir la demande CCR transportant l'identificateur ID de service de données et l'identificateur ID de noeud de rattachement de service de données envoyés par la plate-forme de services de données (420), et
le dispositif comprend en outre un module de consultation d'identificateurs ID (360) qui est configuré pour récupérer l'identificateur ID de noeud de rattachement de service de données à partir de la demande CCR.

9. Dispositif selon la revendication 7, comprenant en outre :
un module de consultation de noeuds (370) configuré pour interroger un noeud correspondant du niveau supérieur dans une arborescence de noeuds de services de données prédéterminée en fonction de l'identificateur ID de noeud de rattachement de service de données trouvé par le module de consultation d'identificateurs ID (360).

10. Système destiné à la facturation, comprenant :
un système de facturation (410) configuré pour recevoir une demande de contrôle de crédit, CCR, transportant un identificateur, ID, de service de données, envoyé par une plate-forme de services de données (420) ; pour consulter un prix d'un produit en fonction de l'identificateur ID de service de données ; pour consulter le prix du produit en fonction d'un identificateur ID de noeud de rattachement de service de données correspondant à l'identificateur ID de service de données lorsque le prix du produit n'est pas trouvé en fonction de l'identificateur ID de service de données, et pour effectuer la facturation en fonction du prix trouvé du produit, et
une plate-forme de services de données (420) configurée pour envoyer la demande CCR au système de facturation, **caractérisée en ce que**, lorsque le prix du produit n'est pas trouvé en fonction de l'identificateur ID de noeud de rattachement de service de données, le système de facturation (410) est en outre configuré pour consulter un noeud correspondant de niveau supérieur dans une arborescence de noeuds de services de données prédéterminée, en fonction de l'identificateur ID de noeud de rattachement de service de données, et pour consulter le prix du produit correspondant au noeud de niveau supérieur de l'identificateur ID de noeud de rattachement de service de données , et pour effectuer la facturation en fonction du prix trouvé du produit, l'arborescence de noeuds de services de données prédéterminée étant configurée pour stocker une relation correspondante entre des noeuds à des niveaux différents.

11. Système de facturation selon la revendication 10, dans lequel la consultation, par le système de facturation (410), du prix du produit en fonction de l'identificateur ID de noeud de rattachement de service de données correspondant à l'identificateur ID de service de données comprend en particulier : la consultation et la récupération de l'identificateur ID de noeud de rattachement de service de données en fonction à la fois de l'identificateur ID de service de données et d'informations de noeuds de rattachement de services de données prédéterminées, et la consultation du prix du produit en fonction à la fois de l'identificateur ID de noeud de rattachement de service de données et d'une relation correspondante prédéterminée entre des noeuds de services de données et des produits.

12. Système de facturation selon la revendication 10, dans lequel la consultation, par le système de facturation (410), du prix du produit en fonction de l'identificateur ID de noeud de rattachement de service de données correspondant à l'identificateur ID de service de données comprend en particulier : la récupération de l'identificateur ID de noeuds de rattachement de service de données transporté dans la demande CCR, et la consultation du prix du produit en fonction à la fois de l'identificateur ID de noeud de rattachement de service de données et d'une relation correspondante prédéterminée entre des noeuds de services de données et des produits.
